# EUROPEAN PATENT SPECIFICATION

(11) **EP 2 399 790 B1**
(45) Date of publication and mention of the grant of the patent: **25.03.2015**
(21) Application number: 11171300.4
(22) Date of filing: 24.06.2011
(51) Int. Cl.: B60S 9/16, B60S 9/18

(54) **Nose wheel assembly and trailer provided with such an assembly**
Bugradvorrichtung und Anhänger mit ein solchen Bugradvorrichtung
Train avant et remorque ayant un tel train avant

(30) Priority: 24.06.2010 NL 2004961
(43) Date of publication of application: 28.12.2011
(73) Proprietor: Reich KG, 35713 Eschenburg-Wissenbach (DE)
(72) Inventor: Staats, Kees Jan, 6721 XX Bennekom (NL); Sijbranda, Sjoerd, 4921 SP Made (NL); Glerum, Hendrik Krijn, 3291 XN Strijen (NL)
(74) Representative: Nederlandsch Octrooibureau

(56) References cited:
- EP-A2- 2 165 893
- DE-A1- 1 755 045
- DE-U1- 20 200 456
- GB-A- 2 392 890

## Description

The present invention relates to a nose wheel assembly for a trailer comprising attachment means for attachment to said trailer, a support tube which is adjustably mounted on said attachment means by means of a bolt/nut construction, and a nose wheel accommodation means which is provided on said support tube, said nose wheel accommodation means comprising two spaced-apart lips which delimit a space for a nose wheel in between, wherein said lips are each provided with an opening for accommodating a shaft in between.

Such a nose wheel assembly is generally known and is used on all kinds of trailers. In particular trailers which weigh more than several hundreds of kilograms, have to comprise a feature which makes it possible to move the trailer if it is not connected to the pulling vehicle. By providing a nose wheel, a three-wheeled (or five-wheeled) vehicle is created which can readily be displaced. The vertical position of the nose wheel has to be adjustable with respect to the pole in order to make this displacement possible. In addition, it is thus possible to move the pole off the ball of the towing hook by moving the nose wheel down with respect to the pole. The reverse action, i.e. mounting the pole on the towing hook, can also be achieved in this way.

Such a nose wheel has relatively small dimensions, as a result of which its driving characteristics are not particularly good. This is not a problem if the trailer is moved across a metalled surface. However, if the trailer is moved across a softer surface, such as an unmetalled surface, a field or the like, the nose wheel will quickly dig itself in due to the small contact area with the ground, thus making further displacement difficult, if not impossible. This applies inter alia to caravans which have to be moved on camping sites. At present, such caravans are often provided with movers, that is to say electrically driven rollers which engage with the wheels mounted on the shaft. When the nose wheel becomes stuck, such movers are subjected to a particularly great load which may cause damage to the wheel (tyre) or mover.

FR 1301668 discloses a nose wheel assembly for a semitrailer, that is to say a nose wheel assembly which is adapted to absorb relatively great forces. The nose wheel consists of two mutually telescopic tubes with a nose wheel accommodation means being hingedly fitted to the bottom telescopic tube. Said nose wheel accommodation means comprises a circumferentially closed sleeve through which a pin is fitted which protrudes on either side and to which a wheel is attached on each of the sides.

DE 20200456 U1 discloses a nose wheel assembly comprising two mutually telescopic tubes with a single arm or lip being fixedly attached to the bottom tube and provided with a shaft around which the nose wheel rotates.

DE-20200456U discloses the preamble of claim 1.

It is an object of the present invention to provide a nose wheel assembly which facilitates handling of a trailer, such as a trailer, caravan or the like, under difficult circumstances, that is to say on an unmetalled surface.

This object is achieved with an above-described nose wheel assembly by means of the features of Claim 1.

According to the present invention, the nose wheel is no longer arranged on the support tube in the usual intended location between the lips. Instead, the nose wheel is arranged laterally next to the lips. It is possible to arrange one nose wheel on each side of the lips, but it is also possible to arrange a nose wheel on only one side.

Obviously, it is possible to use the nose wheel accommodation means in order to install a central nose wheel, which is known per se in the prior art, optionally in combination with nose wheels fitted on one or on both sides. The present invention allows for numerous combinations, such as the use of a single side wheel, a single central wheel, two side wheels, and a combination of side wheel and central wheel.

In addition, it is provided that the nose wheel can be removed from the extension of the shaft which extends through both lips in a simple manner.

As a result of this construction, it is possible to use a nose wheel whose driving properties are significantly improved compared to the prior art, as the nose wheel only works during the displacement if the trailer has been uncoupled from the pulling vehicle. In the coupled position, according to the present invention, the nose wheel is removed from the shaft and the shaft can be displaced in the direction of the pole in the customary manner.

This makes it possible to use a nose wheel having a relatively large diameter and/or greater width as there is no longer any risk of interference with the pole in the non-operational position as the nose wheel has been removed from the shaft.

According to a further advantageous embodiment of the invention, the attachment means comprises a tube, so that this tube and the support tube are arranged so as to be mutually telescopic.

According to a particular embodiment of the present invention, the nose wheel comprises a pneumatic tyre.

The locking of the nose wheel with respect to the extended part of the shaft may be configured in any way which can be conceived in the prior art and is simple to achieve. Thus, a construction using a bayonet fitting may be present in order to retain the nose wheel on the shaft. According to another embodiment, it is possible to use a pin and an opening in the extended part of the shaft. In a further embodiment, it is provided that the shaft is configured in such a manner that when the nose wheel is supported, this nose wheel cannot run off the shaft, but when the nose wheel is moved from the ground, during coupling to the pulling vehicle, the nose wheel, optionally of its own accord, ends up in a position in which it moves away from the shaft or can be removed without further action having to be taken.

According to a further advantageous embodiment of the present invention, a nose wheel is used whose external diameter, that is to say the diameter measured across the external tyre surface, is at least 22 cm.

According to a further advantageous embodiment of the invention, the spaced-apart lips are attached to the support tube in a fixed, immovable manner, such as by welding.

The invention also relates to a trailer comprising a shaft with wheels and chassis with a pole and a nose wheel construction as described above, wherein said attachment means is fitted to said pole of said trailer and said support tube is displaceable between an operational position of the support wheel and a non-operational position of said support wheel, wherein, in the non-operational position of the support wheel, the trailer is connected to a pulling vehicle, wherein, in the non-operational position, the shaft of the nose wheel assembly is situated at a vertical distance from the pole which is smaller than the radius of said wheel.

In addition, such a trailer may be provided with a storage facility for one or both nose wheels.

The present invention also relates to a method for coupling/uncoupling a trailer to/from a pulling vehicle, which trailer is provided with a pole to which a nose wheel is attached which can be displaced vertically, comprising moving said nose wheel in a downward direction until it touches the ground, removing said pole from the towing hook of the pulling vehicle while said pole is supported on the ground by said nose wheel; displacing said trailer without said pulling vehicle, moving said trailer towards the towing hook of the pulling vehicle, fitting the pole end of said trailer onto the towing hook of said pulling vehicle, moving said nose wheel upwards and displacing said trailer using said pulling vehicle, wherein said moving downwards or moving upwards of said nose wheel, respectively, comprises respectively fitting or removing said nose wheel onto/from a shaft of the support tube which can be moved up and down using the nose wheel.

The invention will be explained below in more detail with reference to an exemplary embodiment illustrated in the drawing, in which:
Fig. 1 diagrammatically shows a trailer provided with a nose wheel assembly;
Fig. 2 shows the nose wheel assembly according to Fig. 1 in detail without nose wheels;
Fig. 3 shows the nose wheel assembly according to Fig. 2 with wheels;
Fig. 4 shows a detail of the pole/nose wheel assembly in the non-operational position of the nose wheel assembly.

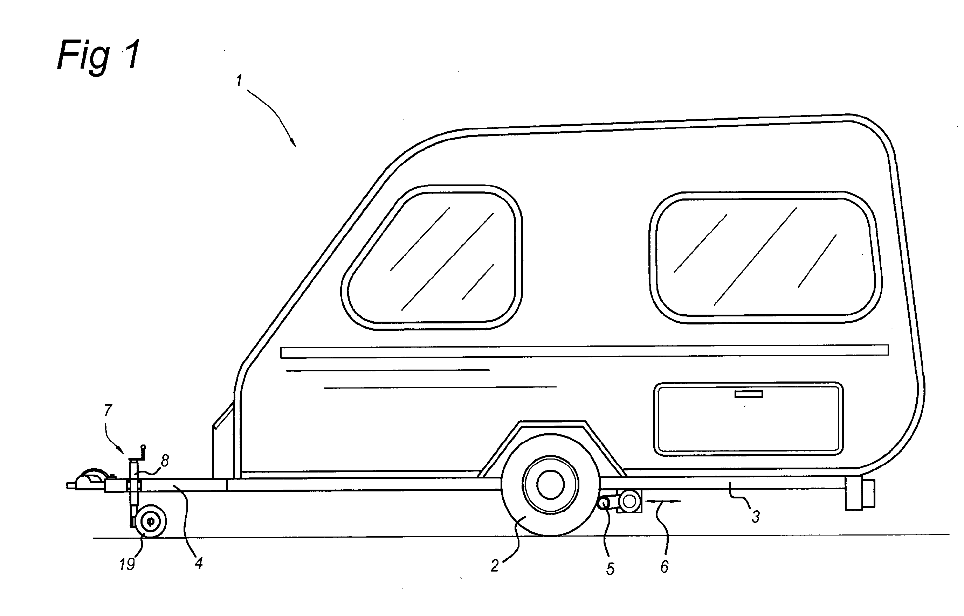

Fig. 1 diagrammatically shows a caravan or other trailer denoted by reference numeral 1. It is provided with a chassis 3 or other type of undercarriage which is provided with a single (or double) shaft (not shown) having wheels 2. A mover 5 is provided which can be moved to and fro in the direction of arrow 6. In the non-towed position of the trailer, the mover 5 can be pressed against wheel 2 in order to make it possible to move the trailer independently from the pulling vehicle.

The pole 4 connected to the undercarriage 3 is provided in the usual manner with a nose wheel assembly which is denoted overall by reference numeral 7. The outer tube 8 thereof is attached to the pole 4. This may be a fixed attachment, but may also be an adjustable (clamping) attachment.

Two nose wheels 19 are present on the bottom side of the nose wheel assembly and are arranged at a distance from one another.

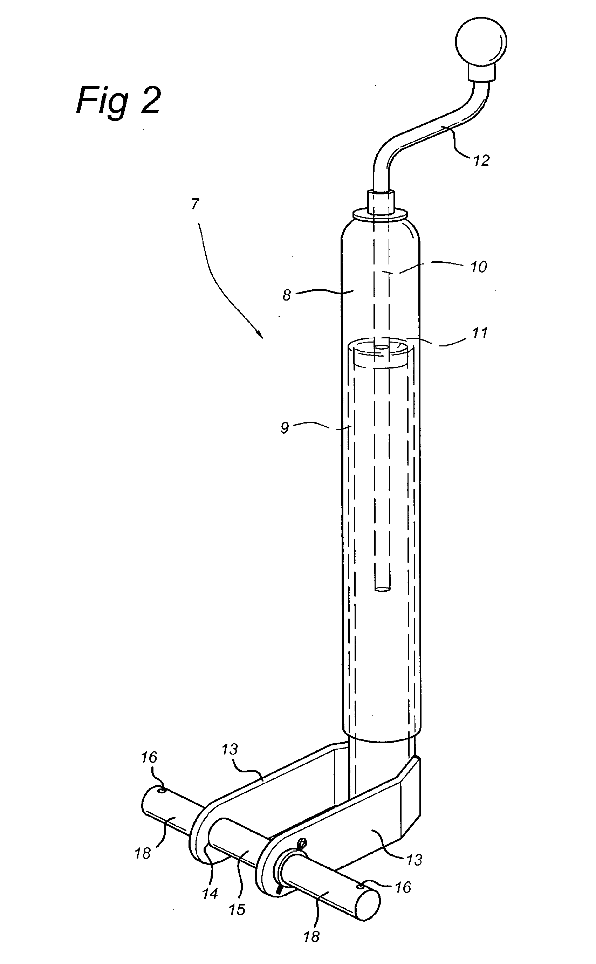

Fig. 2 shows a detail of the nose wheel assembly 7 without wheels 19. It can be seen that an attachment tube 8 is present which can be attached to the pole 4 in the manner described above. Inside the former, a crank 12 with a threaded spindle 10 is accommodated which can engage with a nut 11 which is fixedly connected to a support tube 9. As the threaded spindle 10 rests on the top side of the attachment tube 8, turning the crank 12 will result in the support tube 9 being accommodated to a greater or lesser extent inside the attachment tube 8.

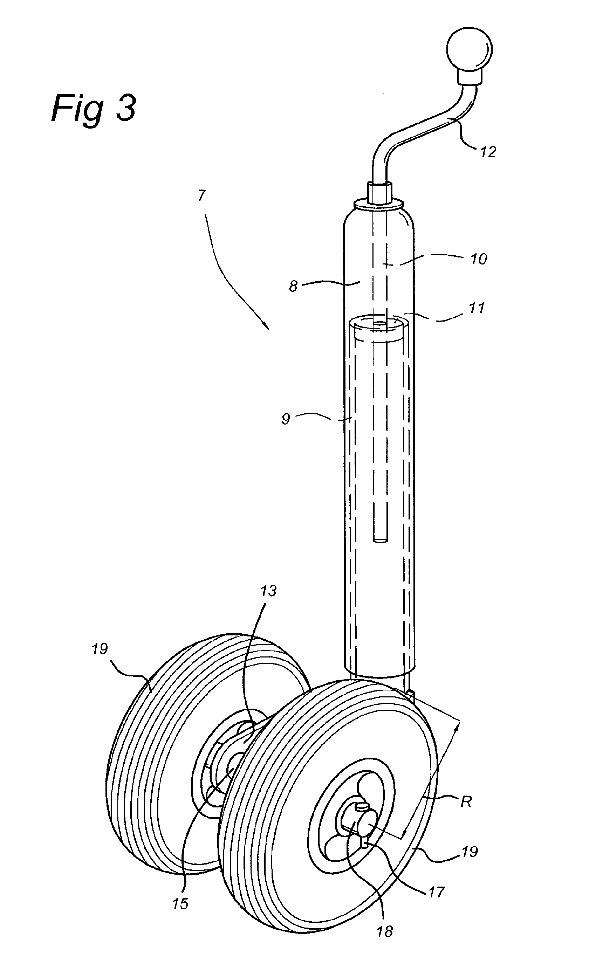

Two spaced-apart lips 13 are welded onto the end of the support tube 9. Between them, these delimit a space for accommodating a customary support wheel, that is to say a support wheel having a small diameter, such as a diameter of for example 15-20 cm. An opening 14 is present in each lip 13. According to the present invention, a shaft 15 is inserted therein. Shaft 15 has a greater length than the distance between the lips, so that protruding parts 18 are present on either side of the lips 13. The shaft 15 is preferably attached to the lips 13 in a fixed manner. Each protruding part 18 is provided with an opening 16 at its end, through which a locking pin 17 can be inserted, as can be seen by comparing Fig. 2 and Fig. 3.

In Fig. 3, the wheels 19 are always shown fitted to the protruding parts 18. Locking can be achieved by subsequently fitting the locking pins 17. The radius of the wheels is indicated by (R) in Fig. 3 and is at least 11 cm. Such a radius is relatively large as a result of which a wheel having good driving properties can be achieved.

However, this does mean that when the support tube 9 has been moved in the upward position in order to move the support wheels 19 off the ground, it is not possible to achieve sufficient ground clearance. This is due to the fact that the support wheels 19 will hit the pole 4 when the support tube 9 is being moved upwards. Due to the relatively large diameter of the wheels, the remaining distance to the ground is insufficient to prevent the support wheels 8 from touching the ground when the pulling vehicle drives over bumps.

In order to solve this problem, the present invention proposes to configure the wheels 19 in such a manner that they can be removed in a simple manner. By removing the locking pins 17, the wheel 19 can be removed in a simple manner and can be fitted back in a simple manner when the support wheel becomes operational again.

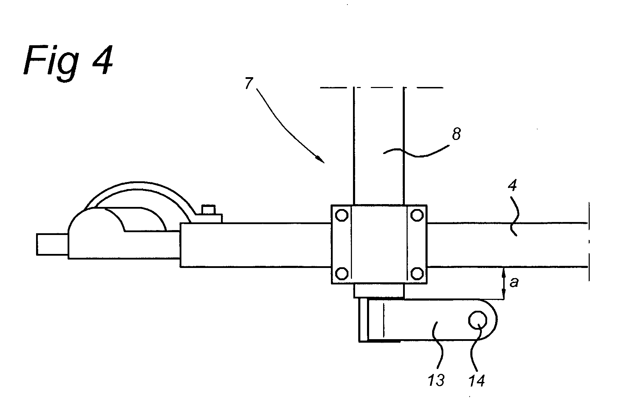

As can be seen in Fig. 4, it is now possible to move the support tube 9 further upwards, due to the removal of the support wheels 19, as the shaft 15 with the lips 13 is now the first part which could touch the pole.

The letter a indicates the distance up to the bottom side of the pole in the non-operational position of the nose wheel assembly. This distance a is smaller than the dimensions of the radius (R) as illustrated in Fig. 3.

As the nose wheel assembly according to the present invention can preferably be used universally, there may be circumstances under which the use of a central nose wheel, optionally in combination with the above-described wheels, is conceivable.

Those who are skilled in the art will immediately be able to think of variants after reading the above which are within the scope of the present invention and/or are obvious in light of the above.

## Claims

1. Nose wheel assembly (7) for a trailer (1) comprising attachment means (8) for attachment to said trailer (1), a support tube (9) which is adjustably mounted on said attachment means (8) by means of a bolt (10)/nut (11) construction, and a nose wheel accommodation means which is provided on said support tube (9), said nose wheel accommodation means comprising two spaced-apart lips (13) which delimit a space for a nose wheel in between, wherein said lips (13) are each provided with an opening (14) for accommodating a shaft in between, **characterized in that** said shaft (15) has a length which is such that it extends, at least at one lip (13), beyond said lip in the direction away from said other lip defining a protruding part and is configured to accommodate a nose wheel (19), wherein a nose wheel (19) is present which is pushed onto said protruding part (18) of said shaft (15) and wherein quickly releasable locking means (17) are present for fixing the position of said wheel (18) on said protruding part (18) of said shaft and for easily removing said wheel from said shaft.

2. Nose wheel assembly according to Claim 1, wherein said shaft (15) extends beyond both lips (13).

3. Nose wheel assembly according to Claim 2, comprising two spaced-apart nose wheels (19).

4. Nose wheel assembly according to one of the preceding claims, wherein said nose wheel (18) comprises a pneumatic tyre.

5. Nose wheel assembly according to one of the preceding claims, wherein said locking means comprise an opening (16) which is arranged at the end of said shaft (15) and a locking pin (17) which can be inserted therein.

6. Nose wheel assembly according to one of the preceding claims, wherein said shaft (15) is welded to said lips (13).

7. Nose wheel assembly according to one of the preceding claims, wherein said nose wheel (18) has an external diameter of at least 22 cm.

8. Trailer (1) comprising a shaft with wheels (2) and undercarriage (3) with a pole (4) and a nose wheel construction according to one of the preceding claims, wherein said attachment means (8) is fitted to said pole (4) of said trailer (1) and said support tube (9) is displaceable between an operational position of the support wheel (19) and a non-operational position of said support wheel, wherein, in the non-operational position of the support wheel, the trailer (1) is connected to a pulling vehicle, wherein, in the non-operational position, the shaft (15) of the nose wheel assembly is situated at a vertical distance (a) from the pole (4) which is smaller than the radius (R) of said wheel.

9. Trailer according to Claim 8, wherein said nose wheel of said nose wheel assembly is removed from said shaft in the non-operational position of said nose wheel.

10. Trailer according to Claim 8 or 9, comprising a drive for said two wheels (2) of said trailer.

11. Trailer according to any of Claims 8-10, comprising a storage facility for two nose wheels (19).

12. Method for coupling/uncoupling a trailer to/from a pulling vehicle, which trailer is provided with a pole (4) to which a nose wheel (19) is attached which can be displaced vertically, comprising moving said nose wheel in a downward direction until it touches the ground, removing said pole (4) from the towing hook of the pulling vehicle while said pole is supported on the ground by said nose wheel; displacing said trailer (1) without said pulling vehicle, moving said trailer towards the towing hook of the pulling vehicle, fitting the pole end of said trailer onto the towing hook of said pulling vehicle, moving said nose wheel (19) upwards and displacing said trailer using said pulling vehicle, **characterized in that** said moving downwards or moving upwards of said nose wheel, respectively, comprises respectively fitting or removing said nose wheel onto/from a shaft (15) of the support tube which can be moved up and down using the nose wheel.

## Patentansprüche

1. Bugradsystem (7) für einen Anhänger (1), umfassend eine Befestigungsmittel (8) zur Befestigung am Anhänger (1), ein Stützrohr (9), das mit Hilfe einer Schraube (10)-Mutter (11)-Konstruktion einstellbar an der Befestigungsmitteln (8) angebracht ist, und am Stützrohr (9) bereitgestellte Bugradaufnahmemittel, wobei die Bugradaufnahmemittel zwei voneinander beabstandete Lippen (13) umfasst, die zwischeneinander einen Raum für ein Bugrad begrenzen, wobei die Lippen (13) jeweils mit einer Öffnung (14) versehen sind, um dazwischen eine Welle aufzunehmen, **dadurch gekennzeichnet, dass** die Welle (15) eine Länge aufweist, die dergestalt ist, dass sie sich bei zumindest einer Lippe in der von der anderen Lippe wegführenden Richtung über diese Lippe hinaus erstreckt und einen vorstehenden Teil definiert, und ausgestaltet ist, um ein Bugrad (19) aufzunehmen, wobei ein Bugrad (19) vorhanden ist, das auf den vorstehenden Teil (18) der Welle (15) gedrückt wird, und wobei schnell lösbare Verriegelungsmittel (17) zum Fixieren der Position des Rads (19) am vorstehenden Teil (18) der Welle und zum einfachen Entfernen des Rads von der Welle vorhanden ist.

2. Bugradsystem nach Anspruch 1, wobei sich die Welle (15) über beide Lippen (13) hinaus erstreckt.

3. Bugradsystem nach Anspruch 2, die zwei voneinander beabstandete Bugräder (19) umfasst.

4. Bugradsystem nach einem der vorangehenden Ansprüche, wobei das Bugrad (19) einen Luftreifen umfasst.

5. Bugradsystem nach einem der vorangehenden Ansprüche, wobei die Verriegelungsmittel eine am Ende der Welle (15) angeordnete Öffnung (16) und einen in selbige einsetzbaren Verriegelungsstift (17) umfasst.

6. Bugradsystem nach einem der vorangehenden Ansprüche, wobei die Welle (15) an den Lippen (13) angeschweißt ist.

7. Bugradsystem nach einem der vorangehenden Ansprüche, wobei das Bugrad (19) einen Außendurchmesser von mindestens 22 cm aufweist.

8. Anhänger (1), umfassend eine Welle mit Rädern (2) und ein Untergestell (3) mit einer Deichsel (4) und einer Bugradkonstruktion nach einem der vorangehenden Ansprüche, wobei die Befestigungsmittel (8) an die Deichsel (4) des Anhängers (1) angepasst ist und das Stützrohr (9) zwischen einer Gebrauchsposition des Stützrads (19) und einer Nichtgebrauchsposition des Stützrads verlagerbar ist, wobei der Anhänger (1) in der Nichtgebrauchsposition des Stützrads mit einem Zugfahrzeug verbunden ist, wobei die Welle (15) der Bugradsystem in der Nichtgebrauchsposition in einem vertikalen Abstand (a) zur Deichsel (4) angeordnet ist, der kleiner als der Radius (R) des Rads ist.

9. Anhänger nach Anspruch 8, wobei das Bugrad der Bugradsystem in der Nichtgebrauchsposition des Bugrads von der Welle entfernt wird.

10. Anhänger nach Anspruch 8 oder 9, der einen Antrieb für die beiden Räder (2) des Anhängers umfasst.

11. Anhänger nach einem der Ansprüche 8 - 10, der eine Aufbewahrungsmittel für zwei Bugräder (19) umfasst.

12. Verfahren zum Koppeln/Entkoppeln eines Anhängers mit/von einem Zugfahrzeug, wobei der Anhänger mit einer Deichsel (4) versehen ist, an der ein vertikal bewegbares Bugrad (19) befestigt ist, umfassend: das Bewegen des Bugrads in einer nach unten führenden Richtung, bis es den Boden berührt; das Entfernen der Deichsel (4) vom Zughaken des Zugfahrzeugs, während die Deichsel durch das Bugrad auf dem Boden abgestützt ist; das Verlagern des Anhängers (1) ohne das Zugfahrzeug; das Bewegen des Anhängers in Richtung des Zughakens des Zugfahrzeugs, das Anbringen des Deichselendes des Anhängers am Zughaken des Zugfahrzeugs, das Nachobenbewegen des Bugrads (19) oben und das Verlagern des Anhängers mit Hilfe des Zugfahrzeugs, **dadurch gekennzeichnet, dass** das Nachuntenbewegen oder das Nachobenbewegen des Bugrads jeweils das Anbringen bzw. Entfernen des Bugrads an/von einer Welle (15) des Stützrohrs, das mit Hilfe des Bugrads nach oben und nach unten bewegbar ist, umfasst.

## Revendications

1. Ensemble de roue de nez (7) pour une remorque (1) comprenant des moyens de fixation (8) pour fixation sur la remorque (1), un tube de support (9) qui est monté de manière ajustable sur les moyens de fixation (8) par l'intermédiaire d'une construction de boulon (10)/écrou (11), et des moyens de réception de roue de nez qui sont agencés sur le tube de support (9), les moyens de réception de roue de nez comprenant deux lèvres espacées (13) qui définissent entre elles un espace pour une roue de nez, dans lequel les lèvres (13) sont chacune munies d'une ouverture (14) pour la réception d'un arbre entre elles, **caractérisé en ce que** l'arbre (15) a une longueur qui est telle qu'il s'étend au moins au niveau d'une lèvre (13), au-delà de cette lèvre dans la direction s'éloignant de l'autre lèvre en définissant une partie en saillie et est configuré pour recevoir une roue de nez (19), dans lequel une roue de nez (19) est présente qui est poussée sur la partie en saillie (18) de l'arbre (15) et dans lequel des moyens de blocage libérable rapidement (17) sont présents pour fixer la position de la roue (19) sur la partie en saillie (18) de l'arbre et pour enlever facilement la roue de l'arbre.

2. Ensemble de roue de nez selon la revendication 1, dans lequel l'arbre (15) s'étend au-delà des deux lèvres (13).

3. Ensemble de roue de nez selon la revendication 2, comprenant deux roues de nez espacées (19).

4. Ensemble de roue de nez selon l'une quelconque des revendications précédentes, dans lequel la roue de nez (18) comprend un pneumatique.

5. Ensemble de roue de nez selon l'une quelconque des revendications précédentes, dans lequel les moyens de blocage comprennent une ouverture (16) qui est agencée à l'extrémité de l'arbre (15) et un axe de blocage (17) qui peut être en inséré dans celle-ci.

6. Ensemble de roue de nez selon l'une quelconque des revendications précédentes, dans lequel l'arbre (15) est soudé sur les lèvres (13).

7. Ensemble de roue de nez selon l'une quelconque des revendications précédentes, dans lequel la roue de nez (18) a un diamètre extérieur d'au moins 22 cm.

8. Remorque (1) comprenant un arbre ayant des roues (2) et un châssis (3) ayant un montant (4) et une roue de nez selon l'une quelconque des revendications précédentes, dans laquelle les moyens de fixation (8) sont agencés sur le montant (4) de la remorque (1) et le tube de support (9) peut être déplacé entre une position opérationnelle de la roue de support (19) et une position non opérationnelle de la roue de support, dans laquelle, dans la position non opérationnelle de la roue de support, la remorque (1) est reliée à un véhicule de traction, dans laquelle, dans la position non opérationnelle, l'arbre (15) de l'ensemble de roue de nez est situé à une distance verticale (a) à partir du montant (4) qui est plus petite que le rayon (R) de la roue

9. Remorque selon la revendication 8, dans laquelle la roue de nez de l'ensemble de roue de nez est enlevée de l'arbre dans la position non opérationnelle de la roue de nez.

10. Remorque selon les revendications 8 ou 9, comprenant un entraînement destiné aux deux roues (2) de la remorque.

11. Remorque selon l'une quelconque des revendications 8 à 10, comprenant une facilité de stockage de deux roues de nez (19).

12. Procédé pour coupler/désaccoupler une remorque à/à partir d'un véhicule de traction, laquelle remorque est munie d'un montant (4) auquel est fixée une roue de nez (19) qui peut être déplacée verticalement, comprenant un déplacement de la roue de nez dans une direction vers le bas jusqu'à ce qu'elle touche le sol, l'enlèvement du montant (4) à partir du crochet d'attelage du véhicule de traction alors que le montant est supporté sur le sol par la roue de nez, déplacer la remorque (1) sans le véhicule de traction, déplacer la remorque vers le crochet d'attelage du véhicule de traction, agencer l'extrémité du montant de la remorque sur le crochet d'attelage du véhicule de traction, déplacer la roue de nez (19) vers le haut et déplacer la remorque en utilisant le véhicule de traction, **caractérisé en ce que** le déplacement vers le bas ou le déplacement vers le haut de la roue de nez comprend, respectivement, l'agencement ou l'enlèvement de la roue de nez sur/à partir d'un arbre (15) du tube de support qui peut être déplacé vers le haut et vers le bas en utilisant la roue de nez.
